(19) Europäisches Patentamt / European Patent Office / Office européen des brevets

(11) **EP 2 057 430 B1**

(12) **FASCICULE DE BREVET EUROPEEN**

(45) Date de publication et mention de la délivrance du brevet:
**17.10.2018 Bulletin 2018/42**

(21) Numéro de dépôt: **07805359.2**

(22) Date de dépôt: **09.08.2007**

(51) Int Cl.:
*F25B 9/00* *(2006.01)*      *F25B 49/02* *(2006.01)*
*F25B 49/00* *(2006.01)*      *B60H 1/32* *(2006.01)*

(86) Numéro de dépôt international:
**PCT/IB2007/053167**

(87) Numéro de publication internationale:
**WO 2008/026115 (06.03.2008 Gazette 2008/10)**

(54) **INSTALLATION DE CLIMATISATION À CYCLE SUPERCRITIQUE**

KLIMATISIERUNGSEINRICHTUNG MIT ÜBERKRITISCHEM KREISLAUF

SUPERCRITICAL CYCLE CLIMATIZATION FACILITY

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **01.09.2006 FR 0607685**

(43) Date de publication de la demande:
**13.05.2009 Bulletin 2009/20**

(73) Titulaire: **Valeo Systèmes Thermiques**
**78321 Le Mesnil Saint Denis Cedex (FR)**

(72) Inventeurs:
• **HALLER, Régine**
**78490 Boissy Sans Avoir (FR)**
• **YAHIA, Mohamed**
**75005 Paris (FR)**
• **LIU, Jin Ming**
**78700 Conflans Saint Honorine (FR)**

(74) Mandataire: **Metz, Gaëlle et al**
**Valeo Systèmes Thermiques**
**8, rue Louis Lormand**
**CS 80517 La Verrière**
**78322 Le Mesnil Saint Denis Cedex (FR)**

(56) Documents cités:
**EP-A- 1 493 979      JP-A- 7 260 313**
**JP-A- 8 303 921      US-A- 5 657 638**
**US-A- 5 918 474**

**Description**

L'invention concerne les installations de climatisation, notamment pour véhicules automobiles. Elle concerne, plus particulièrement, les installations de climatisation fonctionnant selon un cycle supercritique, dans lesquels la pression du fluide réfrigérant du côté haute pression est supérieure à la pression critique du fluide réfrigérant.
Une installation de climatisation fonctionnant selon un cycle supercritique est parcourue par un fluide réfrigérant à haute pression, par exemple le dioxyde de carbone (R744). L'utilisation de ces fluides réfrigérants s'est développée dans les circuits de climatisation des véhicules pour limiter les effets néfastes sur l'environnement des composés fluorés, utilisés classiquement comme fluide réfrigérant.
Une telle installation de climatisation comporte un circuit de fluide équipé principalement d'un compresseur, d'un refroidisseur de gaz, d'un dispositif de détente, et d'un évaporateur. L'installation est également munie d'un régulateur de climatisation dont le rôle est de contrôler le fonctionnement de divers composants du circuit de climatisation pour fournir une puissance frigorifique répondant aux demandes en froid des utilisateurs, ainsi que le démarrage de la climatisation.
Le document EP1493979A divulgue une installation de climatisation suivant le préambule de la revendication 1 et un process suivant le préambule de la revendication 19.
En fonction de la pression du fluide, pendant la phase de démarrage, des pics de pression importants peuvent se produire. Pour éviter l'apparition de ces pics, il est connu d'utiliser le régulateur de manière à contrôler l'ouverture du dispositif de détente, lorsque ce dernier est du type détendeur électronique, ou encore de manière à contrôler la cylindrée du compresseur, lorsque le compresseur est à contrôle externe.
La demande de brevet FR 2 856 782 propose ainsi une solution pour les installations de climatisation munies d'un dispositif de détente électronique, selon laquelle le degré d'ouverture initial du dispositif de détente, au démarrage de la climatisation, est calculé, à partir d'une estimation de la température initiale du fluide à l'entrée du dispositif de détente, de la pression initiale du fluide à la sortie du dispositif de détente, et du débit initial du fluide dans le dispositif de détente, ainsi que d'une estimation de la pression du fluide en entrée du dispositif de détente qui optimise le coefficient de performance. Cette solution permet d'initialiser l'ouverture du dispositif de détente électronique au démarrage de la climatisation, de manière adaptée aux conditions réelles de fonctionnement de la climatisation. Toutefois, elle n'est adaptée que pour les installations équipées d'un dispositif de détente électronique.
Une autre solution adaptée à tout type de dispositif de détente repose sur l'utilisation d'un compresseur à cylindrée variable, muni d'une vanne de commande dont le degré d'ouverture varie en fonction de l'intensité d'un signal de commande. L'installation selon cette solution comporte un dispositif de contrôle qui contrôle le signal de commande de la vanne du compresseur pendant la phase de démarrage de la climatisation de manière à maintenir la pression de décharge du compresseur sensiblement en dessous de la pression de coupure du compresseur.
Toutefois, cette solution est inadaptée aux circuits de climatisation munis de compresseurs à capacité ou cylindrée fixe et de dispositifs de détente mécaniques. En effet, dans de tels circuits, ni la cylindrée du compresseur ni l'ouverture du dispositif de détente ne peuvent être contrôlées.
L'invention a pour but de fournir une régulation améliorée de la phase de démarrage de la climatisation qui soit adaptée aux installations de climatisation munies d'un compresseur à capacité fixe et d'un dispositif de détente mécanique.
A cet effet, l'invention propose une installation de climatisation, notamment pour véhicule à moteur, comprenant un circuit de fluide frigorigène, fonctionnant selon un cycle supercritique, ledit circuit comportant un compresseur, un refroidisseur de gaz, un dispositif de détente et un évaporateur recevant un flux d'air d'un pulseur. L'invention prévoit un dispositif de contrôle apte à contrôler la tension du pulseur pendant la phase de démarrage de la climatisation de manière à maintenir la pression de décharge du compresseur sensiblement en dessous de la pression de coupure du compresseur.
L'invention permet ainsi d'augmenter progressivement la tension du pulseur de manière à éviter que la charge thermique fournie ne soit trop importante lors du démarrage de la boucle froide.
Des caractéristiques optionnelles et/ou de substitution du dispositif de fixation de l'invention sont énoncées ci-après :

- Le dispositif de contrôle comporte une unité de détection apte à détecter un niveau prédéfini de charge thermique dans l'évaporateur et une unité de régulation apte à ajuster la valeur de la tension du pulseur.

- L'unité de détection est apte à opérer pendant la phase de démarrage.

- L'unité de régulation est apte à ajuster la valeur de la tension du pulseur de manière à ce qu'elle ait une variation progressive entre une borne inférieure et une borne supérieure, dans un intervalle de temps de longueur définie par une constante de temps, lorsque ledit niveau de charge thermique est détecté.

- L'unité de détection est apte à vérifier une première condition relative à la température extérieure au véhicule et/ou à la tension cible du pulseur et/ou à la tension de l'embrayage du compresseur pour détecter ledit niveau de charge thermique.

- L'unité de détection est apte à vérifier une deuxième condition relative à la tension courante du pulseur si la première condition n'est pas vérifiée.

- L'unité de détection est apte à vérifier une troisième condition relative à la valeur initiale de la pression de décharge du compresseur au démarrage de la climatisation, si la première condition est vérifiée.

- L'unité de détection est apte à vérifier une quatrième condition relative à la valeur courante de la pression de décharge du compresseur si la troisième condition est vérifiée.

- Le pulseur comporte un module résistif et l'unité de détection est apte à vérifier une première condition relative à la température extérieure au véhicule, et à la tension de l'embrayage du compresseur pour détecter ledit niveau de charge thermique.

- Le pulseur comporte un moteur commandé par un module à vitesse variable comprenant un circuit électronique apte à faire varier la vitesse du moteur du pulseur en fonction d'un signal de commande, tandis que l'unité de régulation est apte à appliquer un signal de commande au circuit pour ajuster la valeur de la tension du pulseur.

- Le dispositif de contrôle comporte un commutateur apte à relier l'unité de régulation audit circuit du module à vitesse variable tandis que le commutateur est contrôlé par l'unité de détection en fonction du niveau de charge thermique détecté.

- Le circuit comporte une résistance de valeur R et un condensateur de valeur C agencés pour former le filtre de premier ordre.

- L'unité de détection comporte un filtre de premier ordre pour ajuster la tension de l'embrayage du compresseur.

- La constante de temps du filtrée l'unité de détection est choisie en fonction de la constante de temps du filtre du signal de commande.

- Le pulseur comporte un moteur commandé par un module résistif définissant un ensemble de tensions prédéfinies, tandis que l'unité de régulation comporte un ensemble de relais reliant le module résistif au moteur pour ajuster la valeur de la tension du pulseur.

- L'activation des relais est contrôlée par l'unité de détection en fonction du niveau de charge thermique détecté.

- La constante de temps est calculée à partir de la tension de l'embrayage du compresseur, de la température extérieure à l'habitable du véhicule et de la pression de décharge du compresseur.

- Le compresseur est à capacité fixe.

L'invention propose également un procédé de régulation d'un circuit de climatisation, fonctionnant selon un cycle supercritique, comprenant un compresseur, un refroidisseur de gaz, un dispositif de détente, et un évaporateur recevant un flux d'air d'un pulseur. L'invention prévoit de contrôler la tension du pulseur pendant la phase de démarrage de la climatisation de manière à maintenir la pression de décharge du compresseur sensiblement en dessous de la pression de coupure du compresseur.

Ainsi, selon la présente invention, la tension ou la vitesse du pulseur augmente progressivement afin de prévenir toute charge thermique trop importante lors du démarrage de la boucle froide.

De façon connue en soi, il existe une relation entre la tension et la vitesse de composants électriques tournants. On peut indifféremment parler de tension ou de vitesse puisque ces grandeurs physiques sont intimement liées et représentatives l'une de l'autre et caractérisent de façon identique le fonctionnement du composant électrique tournant. Ainsi, dans la présente invention, la tension du pulseur est une caractéristique physique du mode de fonctionnement du pulseur. Il en ressort que la tension du pulseur permet de déterminer la vitesse de rotation du pulseur. Il en est de même pour l'embrayage du compresseur.

D'autres caractéristiques et avantages de l'invention apparaîtront à l'examen de la description détaillée ci-après, et des dessins annexés sur lesquels :

- la figure 1A est un schéma d'une installation de climatisation fonctionnant selon un cycle supercritique ;

- la figure 1B est un schéma d'une installation de climatisation de véhicule automobile à moteur munie d'un dispositif de contrôle, selon l'invention ;

- la figure 2 est un schéma de principe du dispositif de contrôle, selon l'invention ;

- la figure 3 est un organigramme illustrant les différentes étapes mises en oeuvre pour détecter un état de forte charge thermique, selon l'invention ;

- la figure 4 est un organigramme illustrant l'activation/désactivation du régulateur de l'unité de régulation en fonction des conditions de charge thermique ;

- la figure 5 est un diagramme illustrant l'évolution de la tension du pulseur dans le temps, selon l'invention ;

- la figure 6 est un schéma du dispositif de contrôle, selon le premier mode de réalisation de l'invention ;

- la figure 7 est un organigramme illustrant les différentes étapes mises en oeuvre pour détecter un état de forte charge thermique, selon le premier mode de réalisation de l'invention ;

- la figure 8 est un schéma fonctionnel de l'unité de détection de charge thermique, selon le premier mode de réalisation de l'invention ;

- la figure 9 est un schéma d'un pulseur muni d'un module résistif, selon un deuxième mode de réalisation de l'invention;

- la figure 10 est un schéma du dispositif de contrôle, selon le deuxième mode de réalisation de l'invention ; et

- la figure 11 est un organigramme illustrant les différentes étapes mises en oeuvre pour détecter un état de forte charge thermique, selon le deuxième mode de réalisation de l'invention.

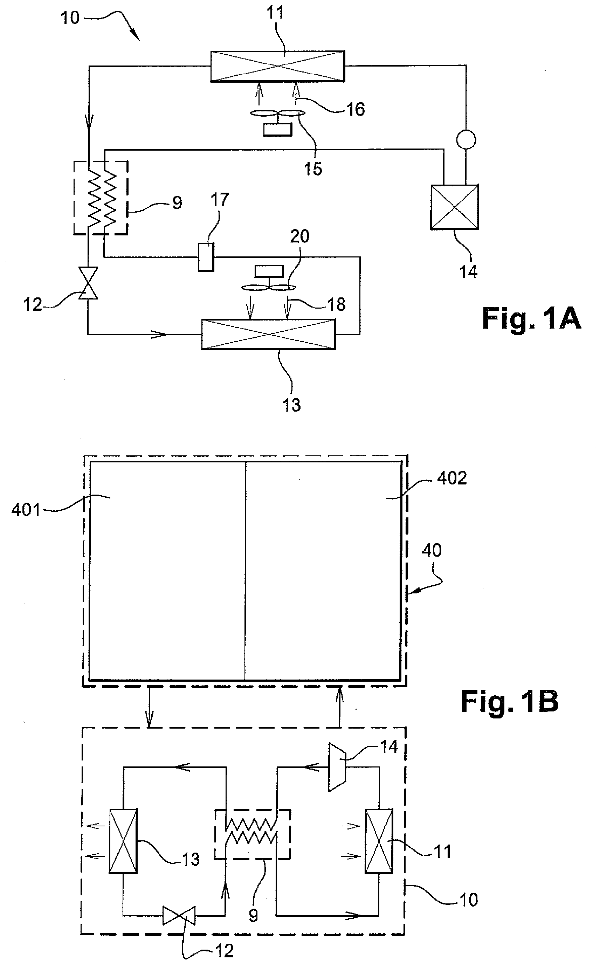

On se réfère tout d'abord à la figure 1A qui représente un schéma d'un circuit de climatisation 10 destiné à être intégré à un véhicule automobile.

Le circuit de climatisation est parcouru par un fluide frigorigène à haute pression, notamment le dioxyde de carbone R744.

Le circuit comporte un compresseur 14 à capacité fixe adapté pour recevoir le fluide à l'état gazeux et pour le comprimer.

Le circuit est en outre équipé d'un refroidisseur de gaz 11 qui refroidit le gaz comprimé par le compresseur à pression sensiblement constante, d'un échangeur thermique interne 9, d'un dispositif de détente 12 qui abaisse la pression du fluide provenant de l'échangeur interne 9, et d'un évaporateur 13 qui fait passer le fluide de l'état liquide à l'état gazeux à pression sensiblement constante. L'évaporateur 13 produit un flux d'air climatisé envoyé vers l'habitacle du véhicule.

Le refroidisseur de gaz 11 reçoit un flux d'air 16 qui dans certaines conditions de fonctionnement est mis en mouvement par un groupe moto-ventilateur 15, pour évacuer la chaleur prélevée au fluide frigorigène.

L'évaporateur 13 reçoit un flux d'air 18 d'un pulseur 20 muni d'un moteur à tension Vpuls variable et produit un flux d'air climatisé envoyé vers l'habitacle.

L'échangeur thermique interne 9 permet un échange de chaleur entre la partie du fluide qui circule du refroidisseur de gaz 11 vers le détendeur 12 et la partie du fluide qui circule de l'évaporateur 13 vers le compresseur 14.

Un accumulateur 17 peut également être prévu en sortie de l'évaporateur 13 pour stocker l'excédent de liquide qui sort de l'évaporateur.

Le dispositif de détente 12 peut être de type mécanique ou électronique.

La figure 1B est un schéma représentant une installation de climatisation selon l'invention, destinée à équiper un véhicule automobile.

L'installation est munie du circuit de climatisation 10 décrit en référence à la figure 1A.

L'installation comprend classiquement un régulateur de climatisation, non représenté, pour réguler les paramètres de fonctionnement de la climatisation. Le régulateur est muni d'un calculateur de climatisation pour calculer certains des paramètres de fonctionnement, et une unité de régulation du confort de l'habitable de la climatisation.

Dans les installations de climatisation classiques fonctionnant selon un cycle réfrigérant supercritique, au démarrage de la climatisation, et tout particulièrement dans des conditions de forte charge thermique, il arrive que la pression de décharge du compresseur 14 dépasse un certain seuil de pression, ce qui entraîne un arrêt de la climatisation. Pendant la période de démarrage de la climatisation, la climatisation risque donc d'être arrêtée et remise en marche, plusieurs fois. Il en résulte une détérioration du confort de conduite et du confort thermique dans l'habitacle du véhicule.

Pour améliorer le fonctionnement de l'installation climatisation pendant la phase de démarrage, et donc éviter des arrêts répétitifs de la climatisation, l'invention prévoit un dispositif de contrôle 40 adapté pour réguler la tension Vpuls du pulseur 20 de l'évaporateur de manière à maintenir la pression de décharge du compresseur sensiblement en dessous de la pression de coupure du compresseur.

Plus précisément, le dispositif de contrôle de l'invention est adapté pour assurer une gestion de la phase de démarrage de la climatisation au moyen d'une régulation progressive de la tension du pulseur 20 de l'évaporateur en fonction du niveau de charge thermique dans l'évaporateur.

Le dispositif de contrôle 40 de l'invention peut être de type informatique, en faisant par exemple partie intégrante du calculateur de climatisation, ou de type électronique, sous la forme d'un circuit électronique agencé dans le circuit de climatisation, selon que la gestion de la tension du pulseur dans le véhicule est mise en oeuvre par un module informatique ou par un module électronique. Cette dernière forme de réalisation est tout particulièrement adaptée pour les véhicules de taille relativement petite.

Le dispositif de contrôle 40 de l'invention comporte une unité de détection de charge thermique 401 pour surveiller le niveau de charge thermique dans l'évaporateur 13 et une unité de régulation 402 pour réguler la tension Vpuls du pulseur en fonction du niveau de charge thermique détecté par l'unité de détection 401. L'unité de détection opère notamment pendant la phase de démarrage de la climatisation.

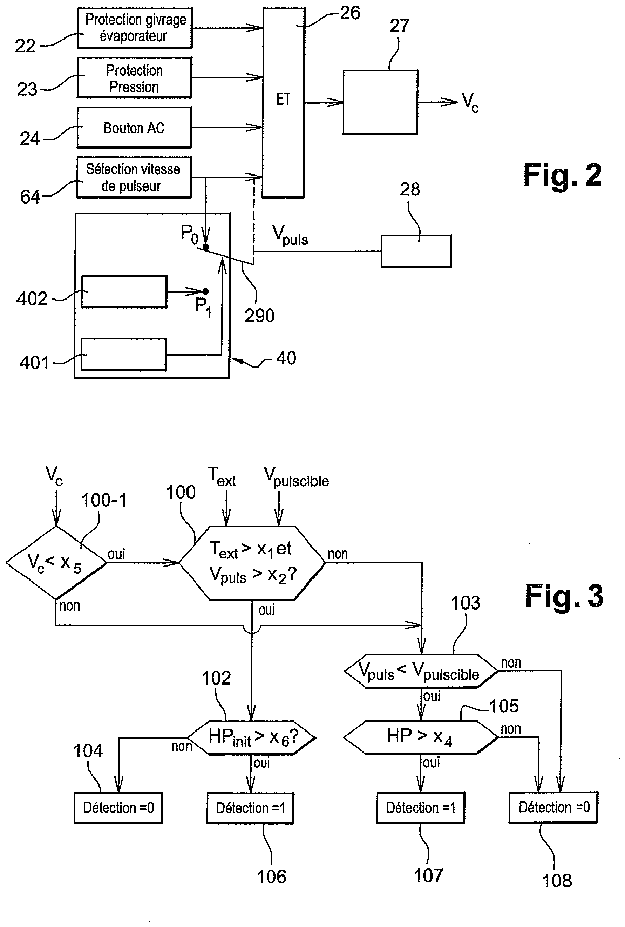

Il est maintenant fait référence à la figure 2 qui illustre le principe général de fonctionnement du dispositif de contrôle, selon l'invention.

Le dispositif de contrôle 40 comporte un bloc de commutation 290 qui peut basculer entre une position "p0" et une position "p1". Dans la position "p0", le bloc de commutation 290 est adapté pour relier le moteur 28 du pulseur 20 à un élément de sélection de tension 64 tandis que l'unité de régulation 402 de la tension du pulseur n'est pas activée. Tant que l'unité de détection 401 ne détecte pas un niveau prédéfini de charge thermique dans l'évaporateur 13, l'unité de régulation 402 demeure inactive. Dans cet état de fonctionnement, la tension du pulseur est définie par l'élément de sélection 64 fournissant soit la tension sélectionnée par l'utilisateur soit la tension fournie par l'unité de gestion du confort de l'habitable de la climatisation.

L'invention prévoit une activation de l'unité de régulation 402 dès que l'unité 401 détecte le niveau prédéfini de charge thermique. Le bloc de commutation 290 est adapté pour passer dans la position "p1" où le moteur 28 du pulseur est relié à l'unité de régulation 402.

Dans les circuits de climatisation de véhicule de taille relativement petite, le moteur 28 du pulseur de l'évaporateur est directement contrôlé par l'élément de sélection de tension 64 du pulseur 20. L'invention prévoit une activation de l'unité de régulation de pulseur 402 dès que l'unité 401 détecte un niveau de forte charge thermique ("détection =1"). Le moteur du pulseur 28 est alors contrôlé par l'unité de régulation du pulseur 402. L'unité de régulation 402 régule alors la tension du pulseur Vpuls à appliquer au moteur 28 de manière à lui donner une variation progressive dans un intervalle de temps de longueur définie par une constante de temps ou selon une loi prédéfinie. Dans la forme de réalisation où le dispositif de contrôle est de type électronique, l'unité de régulation 402 interagit avec l'élément de sélection de tension 64 pour réguler la tension du pulseur dans l'état de fonctionnement "p1".

La figure 2 illustre également un exemple de fonctionnement du compresseur 14 à capacité fixe. Un tel compresseur est muni d'un embrayage dont la tension Vc est contrôlée par une unité de contrôle d'embrayage de compresseur 27 interagissant avec un module de protection contre le givrage de l'évaporateur 22, un module de protection de la pression 23, le bouton de marche/arrêt de la climatisation 24, et l'élément de sélection de tension du pulseur 64.

Le niveau prédéfini de charge thermique que détecte l'unité de détection 401 correspond notamment à un état de forte charge thermique dans l'évaporateur. La charge thermique de l'air sur l'évaporateur est déterminée par des paramètres de fonctionnement de la climatisation, en particulier la température, l'humidité et le débit de l'air. Un état de "forte" charge thermique représente un état de fonctionnement de la climatisation dans lequel la puissance de l'air est élevée. Un tel état de forte charge thermique peut être ainsi obtenu lorsque le triplet de paramètres {température, humidité, et débit de l'air} possède des valeurs telles que la puissance de l'air soit élevée. Par exemple, un état de forte charge thermique est atteint pour une température de 45°C, un taux d'humidité de 40%, et un débit sur l'air de 450Kg/heure, ou encore pour une température de 35°C, un taux d'humidité de 70%, et un débit sur l'air de 450Kg/heure.

Dans les réalisations existantes, les détections de forte charge thermique sont effectuées sans mesure d'humidité de l'air, à partir d'une mesure ou d'une estimation de la température de l'air et en utilisant la valeur de la tension du pulseur comme grandeur représentative du débit d'air. Il en résulte une détection de forte charge thermique imprécise.

L'invention propose une détection d'un état de forte charge thermique améliorée, dont les étapes sont représentées sur la figure 3.

Ainsi, pour déterminer si l'évaporateur est dans un état de forte charge thermique, l'unité de détection 401 vérifie, aux étapes 100 et 100-1, si :

- la température extérieure Text au véhicule est supérieure à un seuil prédéfini x1, par exemple égal à 35 °C, et si
- la tension de l'embrayage Vc du compresseur est inférieure à un seuil prédéfini x5, par exemple égal à 10 VDC (tension courant continu), et si
- la tension cible du pulseur Vpuls$_{cible}$ est supérieure à un seuil prédéfini x2, par exemple égal à 6 VDC.

Une tension d'embrayage Vc supérieure au seuil x5 indique que l'embrayage du compresseur est alimenté.
Par ailleurs, la tension cible x2 de 6 VDC équivaut sensiblement à un débit de 250 Kg/heure.
Si ces trois conditions sont vérifiées, l'unité 401 vérifie à l'étape 102, si la pression initiale de décharge du compresseur HPinit est supérieure à un seuil de pression prédéfini x6, par exemple égal à 65 bars.
Si la condition de l'étape 102 est vérifiée, l'évaporateur est dans un état de forte charge thermique et une variable *"détection"* est mise à 1 à l'étape 106. Sinon, l'évaporateur n'est pas dans un état de forte charge thermique et la variable "déte*ction*" est mise à 0 à l'étape 104.
Si les trois conditions des étapes 100 et 100-1 ne sont pas vérifiées, la boucle de climatisation n'a pas été démarrée. L'unité 401 vérifie alors à l'étape 103 si la tension courante du pulseur Vpuls est inférieure à la tension cible du pulseur Vpuls$_{cible}$. La tension cible du pulseur Vpuls$_{cible}$ correspond à la tension sélectionnée par l'utilisateur ou par l'unité de gestion du confort de l'habitacle. Si cette condition est vérifiée, l'unité de régulation 401 vérifie à l'étape 105 si la valeur courante de la pression de décharge HP est supérieure à un seuil prédéfini x4, par exemple égal à 110 bars.
Si la condition de l'étape 105 est vérifiée, le régulateur poursuit le processus de démarrage et la variable "détection" est mise à "1" à l'étape 107. Sinon, la variable "détection" est mise à "0" à l'étape 108, et le processus de démarrage est terminé.

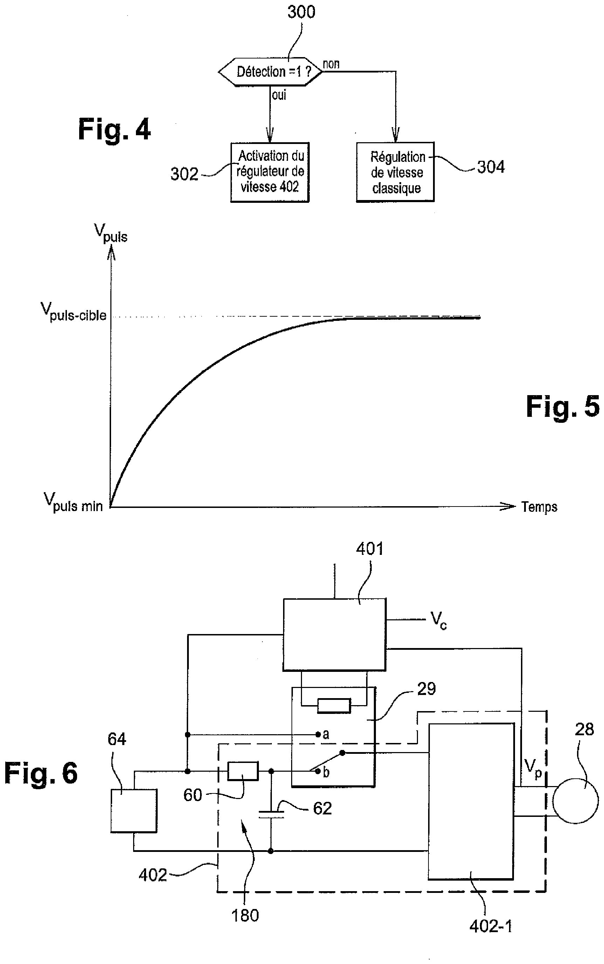

La figure 4 illustre l'activation/désactivation de la régulation de la tension du pulseur en fonction de niveau de charge thermique détecté.
A l'étape 300, l'unité de régulation 402 vérifie si la variable *"détection"* est égale à "1". Tant que la variable "détection" est à "0" (étape 304), l'unité de régulation 402 n'est pas activé et la tension du pulseur est sélectionnée de manière classique soit par l'utilisateur soit par l'unité de gestion du confort de l'habitacle donnée par l'élément de sélection 64.
Dès que la variable "détection" passe à "1", c'est-à-dire que des conditions de fortes charges thermiques sont détectées, l'unité de régulation 402 est activée (étape 302). L'unité de régulation 402 ajuste alors la tension du pulseur 20 de sorte qu'elle ait une variation progressive entre une borne inférieure Vpuls$_{min}$ et une borne supérieure Vpuls$_{cible}$, dans un intervalle de temps de longueur définie par une constante de temps T.
La constante de temps T est déterminée en fonction des paramètres de fonctionnement du circuit de climatisation. Cette constante de temps T représente le temps mis par la tension du pulseur pour passer de la borne inférieure Vpuls$_{min}$ à la borne supérieure Vpuls$_{cible}$.
La figure 5 montre l'allure de la courbe que décrit la tension du pulseur en fonction du temps, selon l'invention. Sur cette figure, l'allure de la vitesse de variation du pulseur est progressive et croissante de la borne inférieure à la borne supérieure.
Comme la tension du pulseur influe sur l'évolution de la pression de décharge du compresseur, la régulation selon l'invention permet d'éviter des variations brusques de la pression de décharge.
Le contrôle de la tension du pulseur en fonction des conditions de charges thermiques permet donc de maintenir la haute pression du compresseur sensiblement en dessous de sa pression de coupure, pendant la phase de démarrage, ce qui permet de limiter l'apparition de pics de pression et donc les arrêts répétitifs de la climatisation.
Dans une forme de réalisation particulière, l'unité de régulation 402 peut comprendre un filtre de premier ordre pour donner une augmentation progressive à la tension du pulseur.
Le filtre de premier ordre peut être mis en oeuvre sous la forme d'un système informatique ou de type électronique ou analogique.
Lorsque le filtre de premier ordre est mis en oeuvre sous la forme d'un système informatique, la consigne de la tension du pulseur pour le module de contrôle 402-1 du moteur 28 peut être calculée conformément à l'équation A1 de l'annexe A. La valeur courante de la tension du pulseur à un instant donné Vpuls(k) est calculée selon l'équation A1 à partir de la borne inférieure Vpuls$_{min}$, de la borne supérieure Vpuls$_{cible}$, de la constante de temps T, et de la valeur de la tension du pulseur calculée à l'itération précédente de la régulation Vpuls$_{(k-1)}$. Dans cette équation A1, le paramètre T$_{ech}$ correspond à la période d'échantillonnage du filtre. Les notations k et k-1 sont utilisées ici pour désigner deux instants d'itération successifs de la régulation, donc distants d'une durée égale à la période de temps.
Dans cette forme de réalisation, la borne supérieure Vpul$_{cible}$ correspond à la tension du pulseur sélectionnée par l'utilisateur ou fixée par l'unité de gestion du confort de l'habitacle. Cette valeur est fournie par un élément de sélection 64.

Lorsque le dispositif de contrôle 40 est mis en oeuvre sous la forme d'un système informatique, la constante de temps T du filtre peut varier au cours de la période de démarrage. Elle peut être calculée à chaque itération du procédé de régulation à partir de paramètres de fonctionnement de la climatisation, et notamment en fonction de la pression de décharge du compresseur HP et/ou de la température extérieure Text et/ou de la vitesse de rotation N du compresseur. Notamment, la consigne de la tension du pulseur pour le module de contrôle 402-1 du moteur 28 sera calculée par l'intermédiaire de l'équation A1.

Lorsque le filtre de premier ordre est électronique ou analogique :

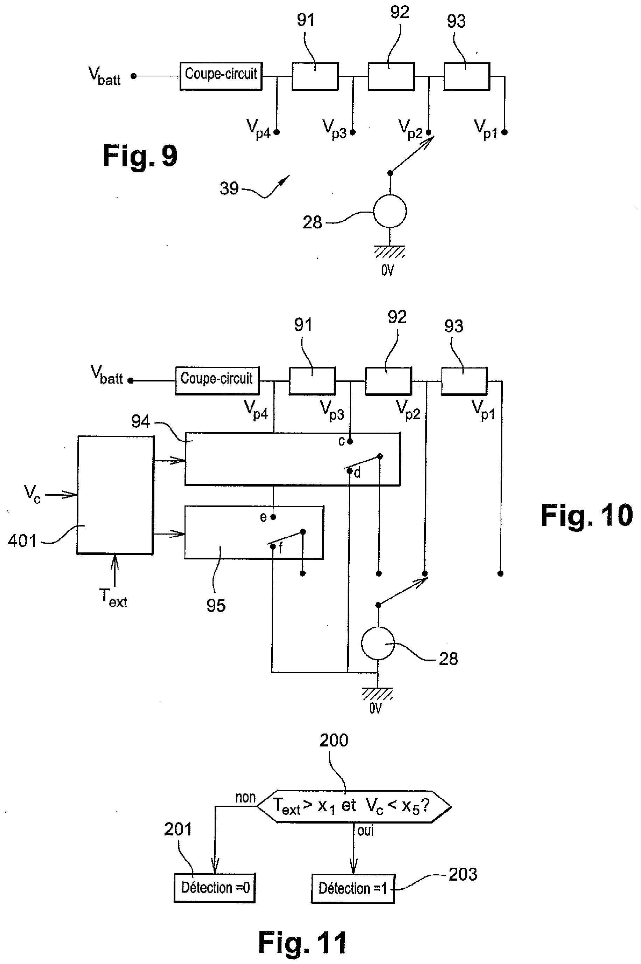

- si le module de contrôle 402-1 est à vitesse variable (figure 6), la consigne de la tension du pulseur pour le module de contrôle peut être fournie par un filtre RC, et la constante de temps est fixe, ce qui permet de réduire les coûts de l'installation;
- si le module de contrôle 402-1 est résistif (figure 9), et donc n'est pas à vitesse variable, seules certaines valeurs de vitesse sont considérées.

L'invention n'est pas limitée à la forme de réalisation où l'unité de régulation 402 comporte un filtre de premier ordre. Elle englobe toutes les formes de réalisation adaptées à faire varier la tension du pulseur de manière progressive entre la borne inférieure $Vpuls_{min}$ et la borne supérieure $Vpuls_{cible}$ pendant l'intervalle de temps déterminée par la constante T, selon l'équation A2 de l'annexe A par exemple.

La suite de la description sera faite en référence à un dispositif de contrôle 40 se présentant sous la forme d'un circuit électronique, avec une constante de temps T fixe, à titre d'exemple non limitatif.

Dans le mode de réalisation particulier de la figure 6, le pulseur comporte un module de vitesse variable 402-1 qui commande le moteur 28 du pulseur. La consigne du module de vitesse variable se présente sous la forme d'un circuit électronique de type RC qui ajuste la vitesse du moteur 28 du pulseur en fonction d'un signal de commande. Le dispositif de contrôle 40 comporte en outre un commutateur 29 qui peut basculer entre une position "a" et une position "b". Dans la position "b", le commutateur 29 relie l'unité de régulation 402-1 au circuit du module de vitesse variable 180 de sorte que le signal de commande du circuit est appliqué par l'unité de régulation 402-1 pour donner une variation progressive à la tension du pulseur, entre $Vpuls_{min}$ et $Vpuls_{cible}$. Dans la position "a", le commutateur 29 est relié à un élément de sélection 64 de sorte que le signal de commande appliqué au circuit correspond à la tension de pulseur sélectionnée soit par l'utilisateur soit par l'unité de gestion du confort de l'habitacle.

Le circuit du module à vitesse variable 180 est en particulier un circuit RC comprenant une résistance 60 de valeur R, un condensateur 62 de capacité C. Selon un exemple de réalisation préféré, l'élément de sélection 64 peut être par exemple une résistance variable de valeur R1 également prévue dans le circuit pour faire varier la tension.

Le circuit du module à vitesse variable 180 est agencé pour former un filtre de premier ordre capable d'ajuster la tension du pulseur de sorte qu'elle ait une variation progressive dans un intervalle de temps de longueur définie par la constante de temps T, lorsque le commutateur 29 est dans la position "b".

Dans la forme de réalisation de la figure 6, la constante de temps T du filtre est égale à RC.

Le commutateur 29 est commandé par l'unité de détection 401 en fonction du niveau de charge thermique qu'elle détecte dans l'évaporateur 13.

Ainsi, lorsque la variable "détection" est à "0", le commutateur 29 reste dans la position "a" et dès qu'il passe à "1", le commutateur 29 passe dans la position "b".

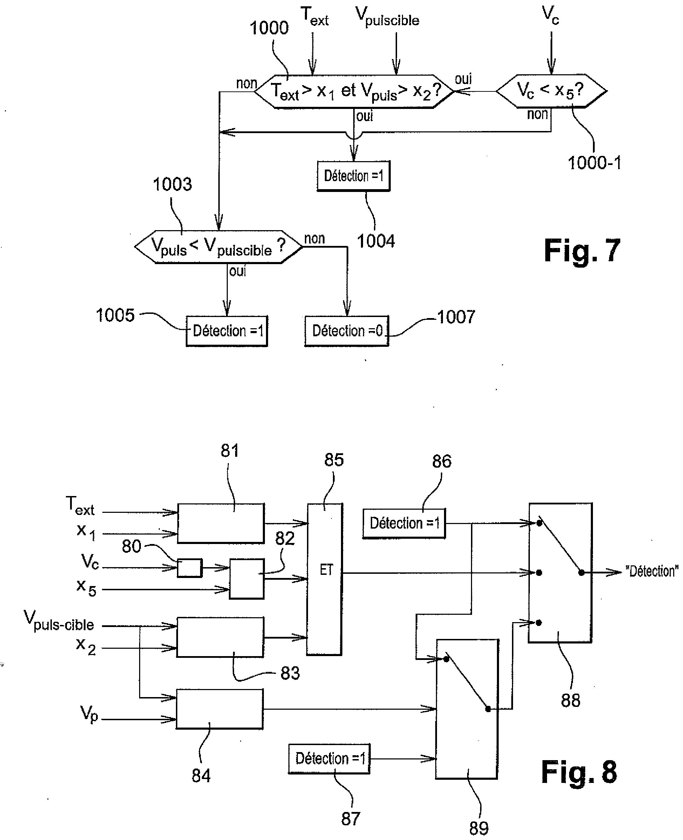

Dans ce premier mode de réalisation, le procédé de détection de fortes charges thermiques de la figure 3 peut être simplifié. La figure 7 représente un tel procédé de détection simplifié.

Les étapes 1000 et 1000-1 sont analogues respectivement aux étapes 100 et 100-1 de la figure 3. Cependant les conditions relatives à la pression de décharge des étapes 102 et 105 de la figure 3 ont été supprimées.

Si les trois conditions de l'étape 1000 ne sont pas vérifiées, l'unité 401 vérifie à l'étape 1003 si la tension courante du pulseur Vpuls est inférieure à la tension cible du pulseur $Vpuls_{cible}$, comme à l'étape 103 de la figure 3. La tension cible du pulseur $Vpuls_{cible}$ correspond là encore à la valeur fournie par l'élément de sélection 64, c'est-à-dire à la tension de pulseur sélectionnée soit par l'utilisateur soit par l'unité de gestion du confort de l'habitacle.

Si les conditions de l'étape 1000 sont simultanément vérifiées, l'évaporateur est dans un état de forte charge thermique et la variable "détection" est mise à "1" à l'étape 1004. Si la condition de l'étape 1003 est vérifiée, l'évaporateur est dans un état de forte charge thermique et la variable "détection" est mise à "1" à l'étape 1005. Sinon, l'évaporateur n'est pas dans un état de forte charge thermique et la variable "détection" est mise à "0" à l'étape 1007.

La figure 8 est un schéma fonctionnel de l'unité de détection 401 de forte charge thermique, selon le mode de réalisation de la figure 7.

L'unité de détection 401 comporte également un filtre de premier ordre 80 adapté pour réguler la tension Vc de l'embrayage du compresseur. Ce filtre est utilisé pour retarder la mesure de la tension de l'embrayage du compresseur et pour gérer la durée du processus de démarrage.

La valeur obtenue après filtrage par le filtre 80 correspond à la valeur de la tension de l'embrayage Vc qui est comparée à x5, à l'étape 1000-1 de la figure 7.

La constante de temps T2 de ce filtre 80 est avantageusement supérieure à la constante de temps T=RC du filtre utilisé pour la régulation de la tension du pulseur par l'unité de régulation 402. En particulier, T2 peut être prise égale à T+30 secondes.

Les blocs 81, 82 et 83 sont des blocs de comparaison correspondant respectivement aux trois conditions vérifiées aux étapes 1000 et 1000-1 de la figure 7. La vérification simultanée des trois conditions est représentée par la porte logique "ET" du bloc 85.

Le bloc 84 est un bloc de comparaison correspondant à l'étape 1003 de la figure 7. Les blocs 86 et 87 d'affectation de la valeur "1" à la variable "détection", et leurs interactions avec les blocs de connexions 88 et 89 représentent les étapes 1004, 1005 et 1007. Le procédé de détection délivre en sortie du bloc 88 la valeur de la variable "détection" ainsi obtenue. Cette valeur est transmise au régulateur 402 pour que est activé, si elle est égale à "1" et que la phase de démarrage n'est pas achevée.

Un autre mode de réalisation va maintenant être décrit pour un pulseur muni d'un module résistif 39 qui commande le moteur 28 du pulseur. Un tel pulseur est représenté sur la figure 9.

Le module résistif 39 se présente classiquement sous la forme d'un ensemble de résistances entre lesquelles le moteur du pulseur 28 peut venir se connecter en fonction de la tension sélectionnée par l'utilisateur ou par l'unité de gestion du confort de l'habitacle (élément 64) parmi les différentes tensions possibles. Les tensions pouvant être sélectionnées ont des valeurs prédéfinies. Dans l'exemple de la figure 9, le module 39 comporte trois résistances 91, 92 et 93 en série et quatre points de connexion Vp1, Vp2, Vp3 et Vp4 entre les résistances définissant quatre tensions distinctes "1", "2", "3", et "4" respectivement, qui peuvent être sélectionnées. Le moteur vient se connecter à l'un de ces quatre points en fonction de la tension sélectionnée. Le paramètre Vbatt représenté sur la figure 9 correspond à la tension de la batterie du véhicule.

La figure 10 est un schéma du dispositif de contrôle, dans ce mode de réalisation à module résistif.

Dans ce mode de réalisation, l'unité de régulation 402 comporte un ensemble de relais 94 et 95 reliant le module résistif 39 au moteur 28 du pulseur 20. Les relais 94 et 95 sont propres à être sélectivement activés pour ajuster la tension à imposer au moteur du pulseur de sorte qu'elle ait une évolution progressive dans un intervalle de temps de longueur définie par la constante de temps T entre les bornes $Vpuls_{min}$ et $Vpuls_{cible}$.

Sur la figure 10, l'ensemble de relais comporte deux relais 94 et 95. Le relais 94 peut basculer entre deux positions "c" et "d" tandis que le relais 94 peut basculer entre deux positions "e" et "f". Dans leurs positions respectives "c" et "e", les relais 94 et 95 relient le module résistif 39 directement au moteur 28 du pulseur, de sorte que la tension appliquée au moteur du pulseur correspond à la sélection par l'utilisateur ou par l'unité de gestion du confort de l'habitacle (élément 64).

Dans leurs positions respectives "d" et "f", les relais 94 et 95 régulent la tension du pulseur pour la faire passer progressivement de $Vpuls_{min}$, en particulier la valeur 0 lorsque le pulseur est à l'arrêt et/ou coupé, à $Vpuls_{cible}$ dans l'intervalle de temps de longueur définie par la constante de temps T.

Les relais 94 et 95 sont commandés par l'unité de détection 401 en fonction du niveau de charge thermique qu'elle détecte dans l'évaporateur.

Ainsi, lorsque la variable "détection" est à "0", les relais 94 et 95 restent dans leurs positions respectives "c" et "e", et lorsque la variable "détection" passe à "1", les relais 94 et 95 passent dans leurs positions respectives "d" et "f".

Le procédé de détection de la figure 3 peut être simplifié dans ce mode de réalisation, comme représenté par la figure 11. Ainsi, pour déterminer si l'évaporateur est dans un état de forte charge thermique, pendant le démarrage, l'unité de détection 401 vérifie simplement, à l'étape 200, si :

- la température extérieure Text au véhicule est supérieure au seuil prédéfini x1, et si
- la tension de l'embrayage Vc du compresseur obtenue après filtrage par un filtre à constante de temps T est inférieure au seuil prédéfini x5.

Si la condition de l'étape 200 est vérifiée, l'évaporateur est dans un état de forte charge thermique, pendant le démarrage, et la variable "détection" est mise à "1" à l'étape 203. Sinon, l'évaporateur n'est pas dans un état de forte charge thermique et la variable "détection" est mise à "0" à l'étape 201.

Cette simplification permet de faire l'économie d'une mesure de la haute pression par rapport au procédé de la figure 3.

L'installation de l'invention permet donc d'augmenter la tension du pulseur progressivement pendant le démarrage de la climatisation si la charge thermique sur l'évaporateur est forte. Elle assure également le démarrage de la boucle de climatisation avec une tension de pulseur faible, en particulier dans les cas où la tension du pulseur est réelle. Ainsi, la boucle de climatisation peut être démarrée avec la tension réelle du pulseur pendant une durée déterminée, avant de passer dans un mode de fonctionnement où la tension du pulseur est sélectionnée (élément de sélection 64). Après le démarrage de la boucle de climatisation, la tension du pulseur peut alors atteindre la tension du pulseur sélectionnée.

Par conséquent, la haute pression du compresseur HP reste maintenue au-dessous de sa pression de coupure pendant la période de démarrage, ce qui permet d'éviter les pics de pression et les arrêts/activations répétitifs de la climatisation.

Le dispositif de contrôle proposé par l'invention fournit donc un contrôle efficace de la phase de démarrage d'un circuit de climatisation à cycle supercritique, muni d'un compresseur à capacité fixe et/ou d'un dispositif de détente mécanique.

Bien que l'invention soit particulièrement avantageuse pour un circuit de climatisation muni d'un compresseur à capacité fixe et d'un dispositif de détente mécanique, elle s'applique également à des circuits de climatisation munis de d'autres types de compresseurs et/ou de dispositifs de détente. Par exemple, si le compresseur est à cylindrée variable et si la réduction de cylindrée du compresseur s'avère insuffisante pour limiter les pics de pression, pendant la phase de démarrage de la climatisation, il est possible d'utiliser l'installation et le procédé de l'invention comme solution globale de prévention des pics de pression.

La présente invention procure de nombreux avantages par rapport aux dispositifs connus. En particulier, elle permet d'augmenter progressivement la tension du pulseur pendant la phase de démarrage de la boucle froide si la charge thermique sur l'évaporateur est forte afin de limiter les pics de pressions trop importants. Il rend également possible un démarrage de la boucle froide avec une vitesse (ou tension) nulle du pulseur pendant un durée déterminée avant de passer à la vitesse (ou tension) du pulseur sélectionnée. Enfin, elle permet, notamment, la réalisation électromécanique pour une boucle froide ayant un compresseur à cylindrée fixe et à détendeur mécanique.

L'invention n'est pas limitée aux modes de réalisation décrits ci-dessus. Elle englobe toutes les variantes de réalisation qui pourront être envisagées par l'homme du métier. En particulier, l'invention couvre également les formes de réalisations où la tension du pulseur est régulée pendant la phase de démarrage indépendamment des conditions de charges thermiques.

Annexe A

$$Vpuls(k) = \frac{\dfrac{K}{T_{ech}} * Vpuls(k-1)}{(1 + \dfrac{K}{T_{ech}})} + \frac{1}{1 + \dfrac{K}{T_{ech}}} * (Vpuls_{max} - Vpuls_{min})$$

A1:

$$Vpuls(t) = (Vpuls_{cible} - Vpuls_{min})(1 - e^{-\frac{t}{R}}) + Vpuls_{min}$$

A2:

**Revendications**

1. Installation de climatisation, notamment pour véhicule à moteur, comprenant un circuit de fluide frigorigène fonctionnant selon un cycle supercritique, ledit circuit comportant un compresseur (14), un refroidisseur de gaz (11), un dispositif de détente (12) et un évaporateur (13) recevant un flux d'air d'un pulseur (20), **caractérisée en ce qu'**elle comporte en outre un dispositif de contrôle (40) apte à contrôler la tension du pulseur (20) pendant la phase de démarrage de la climatisation de manière à maintenir la pression de décharge du compresseur sensiblement en dessous de la pression de coupure du compresseur.

2. Installation selon la revendication 1, **caractérisée en ce que** le dispositif de contrôle comporte une unité de détection (401) apte à détecter un niveau prédéfini de charge thermique dans l'évaporateur et une unité de régulation (402) apte à ajuster la valeur de la tension du pulseur.

3. Installation selon la revendication 2, **caractérisée en ce que** l'unité de détection (401) est apte à opérer pendant la phase de démarrage.

4. Installation selon l'une des revendications 2 et 3, **caractérisée en ce que** l'unité de régulation (402) est apte à ajuster la valeur de la tension du pulseur de manière à ce qu'elle ait une variation progressive entre une borne inférieure et une borne supérieure, dans un intervalle de temps de longueur définie par une constante de temps, lorsque ledit niveau de charge thermique est détecté.

5. Installation selon l'une des revendications 2 à 4, **caractérisée en ce que** l'unité de détection (401) est apte à vérifier une première condition relative à la température extérieure au véhicule et/ou à la tension cible du pulseur et/ou à la tension de l'embrayage du compresseur pour détecter ledit niveau de charge thermique.

6. Installation selon l'une des revendications 2 à 4, **caractérisée en ce que** l'unité de détection (401) est apte à vérifier une deuxième condition (103, 1003) relative à la tension courante du pulseur si la première condition n'est pas vérifiée.

7. Installation selon l'une des revendications 5 et 6, **caractérisée en ce que** l'unité de détection (401) est apte à vérifier une troisième condition (102) relative à la valeur initiale de la pression de décharge du compresseur au démarrage de la climatisation, si la première condition (100, 1000) est vérifiée.

8. Installation selon l'une des revendications 6 et 7, **caractérisée en ce que** l'unité de détection (401) est apte à vérifier une quatrième condition (105) relative à la valeur courante de la pression de décharge du compresseur si la troisième condition est vérifiée.

9. Installation selon l'une des revendications 2 à 4, **caractérisée en ce que** le pulseur comporte un module résistif (39) et **en ce que** l'unité de détection (401) est apte à vérifier une première condition (200) relative à la température extérieure au véhicule, et à la tension de l'embrayage du compresseur pour détecter ledit niveau de charge thermique.

10. Installation selon l'une des revendication 2 à 9, **caractérisée en ce que** le pulseur comporte un moteur commandé par un module à vitesse variable (180) comprenant un circuit électronique apte à faire varier la vitesse du moteur du pulseur en fonction d'un signal de commande, et **en ce que** l'unité de régulation (402) est apte à appliquer un signal de commande au circuit pour ajuster la valeur de la tension du pulseur.

11. Installation selon la revendication 10, **caractérisée en ce que** le dispositif de contrôle (40) comporte un commutateur (29) apte à relier l'unité de régulation audit circuit du module à vitesse variable et **en ce que** le commutateur est contrôlé par l'unité de détection (402) en fonction du niveau de charge thermique détecté.

12. Installation selon l'une des revendications 10 et 11, **caractérisée en ce que** circuit comporte une résistance de valeur R et un condensateur de valeur C agencés pour former le filtre de premier ordre.

13. Installation selon l'une des revendications 10 à 12, **caractérisée en ce que** l'unité de détection (401) comporte un filtre de premier ordre (80) pour ajuster la tension de l'embrayage du compresseur.

14. Installation selon la revendication 13, **caractérisée en ce que** la constante de temps du filtre (80) de l'unité de détection est choisie en fonction de la constante de temps du filtre du signal de commande.

15. Installation selon la revendication 2 à 9, **caractérisée en ce que** le pulseur comporte un moteur commandé par un module résistif définissant un ensemble de tensions prédéfinies, et **en ce que** l'unité de régulation (401) comporte un ensemble de relais (94, 95) reliant le module résistif au moteur pour ajuster la valeur de la tension du pulseur.

16. Installation selon la revendication 15, **caractérisée en ce que** l'activation des relais est contrôlée par l'unité de détection (402) en fonction du niveau de charge thermique détecté.

17. Installation selon l'une des revendications 2 à 9, **caractérisée en ce que** la constante de temps est calculée à partir de la tension de l'embrayage du compresseur, de la température extérieure à l'habitable du véhicule et de la pression de décharge du compresseur.

18. Installation selon l'une des revendications précédentes, **caractérisée en ce que** le compresseur (14) est à capacité fixe.

19. Procédé de régulation d'un circuit de climatisation, fonctionnant selon un cycle supercritique, comprenant un compresseur (14), un refroidisseur de gaz (11), un dispositif de détente (12) et un évaporateur (13) recevant un flux d'air d'un pulseur (20), **caractérisé en ce qu'**on contrôle la tension du pulseur (20) pendant la phase de démarrage de la climatisation de manière à maintenir la pression de décharge du compresseur sensiblement en dessous de la pression de coupure du compresseur.

**Patentansprüche**

1. Klimatisierungsanlage, insbesondere für ein Motorfahrzeug, die einen Kältemittelkreislauf enthält, der gemäß einem überkritischen Zyklus arbeitet, wobei der Kreislauf einen Kompressor (14), einen Gaskühler (11), eine Expansionsvorrichtung (12) und einen Verdampfer (13) aufweist, der einen Luftstrom von einem Gebläse (20) empfängt, **dadurch gekennzeichnet, dass** sie außerdem eine Steuervorrichtung (40) aufweist, die die Spannung des Gebläses (20) während der Startphase der Klimatisierung steuern kann, um den Entladedruck des Kompressors im Wesentlichen unter dem Abschaltdruck des Kompressors zu halten.

2. Anlage nach Anspruch 1, **dadurch gekennzeichnet, dass** die Steuervorrichtung eine Erfassungseinheit (401), die einen vordefinierten Pegel der Wärmebelastung im Verdampfer erfassen kann, und eine Regelungseinheit (402) aufweist, die den Wert der Spannung des Gebläse einstellen kann.

3. Anlage nach Anspruch 2, **dadurch gekennzeichnet, dass** die Erfassungseinheit (401) während der Startphase arbeiten kann.

4. Anlage nach einem der Ansprüche 2 und 3, **dadurch gekennzeichnet, dass** die Regelungseinheit (402) den Wert der Spannung des Gebläses so einstellen kann, dass er eine progressive Änderung zwischen einer unteren Grenze und einer oberen Grenze in einem Zeitintervall einer durch eine Zeitkonstante definierten Länge hat, wenn der Wärmebelastungspegel erfasst wird.

5. Anlage nach einem der Ansprüche 2 bis 4, **dadurch gekennzeichnet, dass** die Erfassungseinheit (401) eine erste Bedingung bezüglich der Temperatur außerhalb des Fahrzeugs und/oder der Zielspannung des Gebläses und/oder der Spannung der Kupplung des Kompressors überprüfen kann, um den Wärmebelastungspegel zu erfassen.

6. Anlage nach einem der Ansprüche 2 bis 4, **dadurch gekennzeichnet, dass** die Erfassungseinheit (401) eine zweite Bedingung (103, 1003) bezüglich der laufenden Spannung des Gebläses überprüfen kann, wenn die erste Bedingung nicht erfüllt wird.

7. Anlage nach einem der Ansprüche 5 und 6, **dadurch gekennzeichnet, dass** die Erfassungseinheit (401) eine dritte Bedingung (102) bezüglich des Anfangswerts des Entladedrucks des Kompressor beim Start der Klimatisierung überprüfen kann, wenn die erste Bedingung (100, 1000) erfüllt wird.

8. Anlage nach einem der Ansprüche 6 und 7, **dadurch gekennzeichnet, dass** die Erfassungseinheit (401) eine vierte Bedingung (105) bezüglich des laufenden Werts des Entladedrucks des Kompressors überprüfen kann, wenn die dritte Bedingung erfüllt wird.

9. Anlage nach einem der Ansprüche 2 bis 4, **dadurch gekennzeichnet, dass** das Gebläse ein Widerstandsmodul (39) aufweist, und dass die Erfassungseinheit (401) eine erste Bedingung (200) bezüglich der Temperatur außerhalb des Fahrzeugs und der Spannung der Kupplung des Kompressors überprüfen kann, um den Wärmebelastungspegel zu erfassen.

10. Anlage nach einem der Ansprüche 2 bis 9, **dadurch gekennzeichnet, dass** das Gebläse einen von einem Modul mit variabler Geschwindigkeit (180) gesteuerten Motor aufweist, das einen elektronischen Schaltkreis enthält, der die Geschwindigkeit des Motors des Gebläses abhängig von einem Steuersignal ändern kann, und dass die Regelungseinheit (402) ein Steuersignal an den Schaltkreis anlegen kann, um den Wert der Spannung des Gebläses einzustellen.

11. Anlage nach Anspruch 10, **dadurch gekennzeichnet, dass** die Steuervorrichtung (40) einen Schalter (29) aufweist, der die Regelungseinheit mit dem Schaltkreis des Moduls mit variabler Geschwindigkeit verbinden kann, und dass der Schalter von der Erfassungseinheit (402) abhängig vom erfassten Wärmebelastungspegel gesteuert wird.

12. Anlage nach einem der Ansprüche 10 und 11, **dadurch gekennzeichnet, dass** der Schaltkreis einen Widerstand des Werts R und einen Kondensator des Werts C aufweist, die eingerichtet sind, um das Filter erster Ordnung zu bilden.

13. Anlage nach einem der Ansprüche 10 bis 12, **dadurch gekennzeichnet, dass** die Erfassungseinheit (401) ein Filter erster Ordnung (80) aufweist, um die Spannung der Kupplung des Kompressors einzustellen.

**14.** Anlage nach Anspruch 13, **dadurch gekennzeichnet, dass** die Zeitkonstante des Filters (80) der Erfassungseinheit abhängig von der Zeitkonstante des Filters des Steuersignals gewählt wird.

**15.** Anlage nach Anspruch 2 bis 9, **dadurch gekennzeichnet, dass** das Gebläse einen von einem Widerstandsmodul gesteuerten Motor aufweist, das eine Einheit von vordefinierten Spannungen definiert, und dass die Regelungseinheit (402) eine Einheit von Relais (94, 95) aufweist, die das Widerstandsmodul mit dem Motor verbinden, um den Wert der Spannung des Gebläses einzustellen.

**16.** Anlage nach Anspruch 15, **dadurch gekennzeichnet, dass** die Aktivierung der Relais von der Erfassungseinheit (402) abhängig vom erfassten Wärmebelastungspegel gesteuert wird.

**17.** Anlage nach einem der Ansprüche 2 bis 9, **dadurch gekennzeichnet, dass** die Zeitkonstante ausgehend von der Spannung der Kupplung des Kompressors, der Temperatur außerhalb des Innenraums des Fahrzeugs und dem Entladedruck des Kompressors berechnet wird.

**18.** Anlage nach einem der vorhergehenden Ansprüche, **dadurch gekennzeichnet, dass** der Kompressor (14) eine feste Kapazität hat.

**19.** Verfahren zur Regelung eines Klimatisierungskreislaufs, der gemäß einem überkritischen Zyklus arbeitet, der einen Kompressor (14), einen Gaskühler (11), eine Expansionsvorrichtung (12) und einen Verdampfer (13) enthält, der einen Luftstrom von einem Gebläse (20) empfängt, **dadurch gekennzeichnet, dass** die Spannung des Gebläses (20) während der Startphase der Klimatisierung so gesteuert wird, dass der Entladedruck des Kompressors im Wesentlichen unter dem Abschaltdruck des Kompressors gehalten wird.

## Claims

**1.** Air conditioning installation, particularly for a motor vehicle, comprising a refrigerant circuit operating on a supercritical cycle, the said fluid circuit comprising a compressor (14), a gas cooler (11), an expansion device (12) and an evaporator (13) receiving a flow of air from a blower (20), **characterized in that** it further comprises a control device (40) able to control the voltage of the blower (20) during the air-conditioning start-up phase so as to keep the discharge pressure of the compressor substantially below the cutout pressure of the compressor.

**2.** Installation according to Claim 1, **characterized in that** the control device comprises a detection unit (401) able to detect a predefined level of thermal load in the evaporator and a regulation unit (402) able to adjust the blower voltage value.

**3.** Installation according to Claim 2, **characterized in that** the detection unit (401) is able to operate during the start-up phase.

**4.** Installation according to one of Claims 2 and 3, **characterized in that** the regulation unit (402) is able to adjust the blower voltage value so that it varies progressively between a lower boundary and an upper boundary, in a space of time, the length of which is defined by a time constant, when the said level of thermal load is detected.

**5.** Installation according to one of Claims 2 to 4, **characterized in that** the detection unit (401) is able to verify a first condition relating to the temperature outside the vehicle and/or to the target blower voltage and/or to the compressor clutch voltage in order to detect the said level of thermal load.

**6.** Installation according to one of Claims 2 to 4, **characterized in that** the detection unit (401) is able to verify a second condition (103, 1003) relating to the current blower voltage if the first condition is not verified.

**7.** Installation according to one of Claims 5 and 6, **characterized in that** the detection unit (401) is able to verify a third condition (102) relating to the initial value of the compressor discharge pressure upon air conditioning start-up, if the first condition (100, 1000) is verified.

**8.** Installation according to one of Claims 6 and 7, **characterized in that** the detection unit (401) is able to verify a fourth condition (105) relating to the current compressor discharge pressure value if the third condition is verified.

9. Installation according to one of Claims 2 to 4, **characterized in that** the blower comprises a resistive module (39) and **in that** the detection unit (401) is able to verify a first condition (200) relating to the temperature outside the vehicle, and to the voltage of the compressor clutch in order to detect the said level of thermal load.

10. Installation according to one of Claims 2 to 9, **characterized in that** the blower comprises a motor operated by a variable-speed module (180) comprising an electronic circuit able to cause the blower motor speed to vary according to a control signal, and **in that** the regulation unit (402) is able to apply a control signal to the circuit in order to adjust the blower voltage value.

11. Installation according to Claim 10, **characterized in that** the control device (40) comprises a switch (29) able to connect the regulation unit to the said variable-speed module circuit and **in that** the switch is controlled by the detection unit (402) as a function of the detected level of thermal load.

12. Installation according to one of Claims 10 and 11, **characterized in that** the circuit comprises a resistor of resistance R and a capacitor of capacitance C arranged in such a way as to form a first-order filter.

13. Installation according to one of Claims 10 to 12, **characterized in that** the detection unit (401) comprises a first-order filter (80) for adjusting the compressor clutch voltage.

14. Installation according to Claim 13, **characterized in that** the time constant of the filter (80) of the detection unit is chosen as a function of the time constant of the filter of the control signal.

15. Installation according to Claims 2 to 9, **characterized in that** the blower comprises a motor operated by a resistive module defining a set of predefined voltages, and **in that** the regulation unit (401) comprises a set of relays (94, 95) connecting the resistive module to the motor for adjusting the blower voltage value.

16. Installation according to Claim 15, **characterized in that** activation of the relays is controlled by the detection unit (402) as a function of the detected level of thermal load.

17. Installation according to one of Claims 2 to 9, **characterized in that** the time constant is calculated from the compressor clutch voltage, the temperature outside the vehicle interior and the compressor discharge pressure.

18. Installation according to one of the preceding claims, **characterized in that** the compressor (14) has a fixed displacement.

19. Method for regulating an air conditioning circuit operating on a supercritical cycle, comprising a compressor (14), a gas cooler (11), an expansion device (12) and an evaporator (13) receiving a flow of air from a blower (20), **characterized in that** the voltage of the blower (20) during the air conditioning start-up phase is controlled in such a way as to keep the discharge pressure of the compressor substantially below the cutout pressure of the compressor.

**Fig. 1A**

**Fig. 1B**

**Fig. 2**

**Fig. 3**

**Fig. 4**

300

Détection =1 ?  — non

oui

302 — Activation du régulateur de vitesse 402

304 — Régulation de vitesse classique

**Fig. 5**

$V_{puls}$

$V_{puls-cible}$

$V_{puls\,min}$

Temps

**Fig. 6**

401

$V_c$

29

28

64

60

62

$V_p$

402

180

402-1

a

b

$T_{ext}$   $V_{pulscible}$   $V_c$

1000

non   $T_{ext} > x_1$ et $V_{puls} > x_2$ ?   oui   $V_c < x_5$ ?

oui   non

1000-1

Détection =1

1003   1004

$V_{puls} < V_{pulscible}$ ?   non

oui

**Fig. 7**

1005   Détection =1   Détection =0   1007

$T_{ext}$

$x_1$

$V_c$   80

$x_5$

81   85   86

82

ET   Détection =1

$V_{puls-cible}$

$x_2$

83

$V_p$

84

Détection =1   87

88

89

"Détection"

**Fig. 8**

91    92    93

$V_{batt}$ •—— Coupe-circuit ——[    ] ——[    ] ——[    ]——

$V_{p4}$•    $V_{p3}$•    $V_{p2}$•    $V_{p1}$•

## Fig. 9

39

28

0V

91    92    93

$V_{batt}$ •—— Coupe-circuit ——[    ] ——[    ] ——[    ]——

$V_{p4}$    $V_{p3}$    $V_{p2}$    $V_{p1}$

94

$V_c$

401

c•

d•

e•

f•

$T_{ext}$

95

28

0V

## Fig. 10

200

non  $T_{ext} > x_1$ et $V_c < x_5$?

201

oui

Détection =0

Détection =1    203

## Fig. 11

## RÉFÉRENCES CITÉES DANS LA DESCRIPTION

**Documents brevets cités dans la description**

- EP 1493979 A

- FR 2856782